# EUROPEAN PATENT APPLICATION

(11) **EP 1 593 302 A1**
(43) Date of publication of application: **09.11.2005**
(21) Application number: 05076008.1
(22) Date of filing: 29.04.2005
(51) Int. Cl.: A01G 9/10

(54) **Assembly comprising a carrier for ball plants as well as such a carrier**

(30) Priority: 06.05.2004 NL 1026120
(71) Applicant: Desch Plantpak B.V., 5145 PC Waalwijk (NL)
(72) Inventor: Mortko, Stanislaw Adam Julian, 5161 PW Sprang Capelle (NL); Van de Voorde, Geert Kamiel Hélène, 9270 Laarne (BE)
(74) Representative: Veldman-Dijkers, Cornelia G. C.

(57) **Abstract**

An assembly provided with a carrier for ball plants, comprising a substantially flat body accommodating a number of wall-bounded holders, which are open at least at an upper side thereof. The assembly is furthermore provided with pots made of a biodegradable material that can be detachably positioned within said holders, which pots contain the ball plants.

## Description

The invention relates to an assembly provided with a carrier for ball plants, comprising a substantially flat body accommodating a number of wall-bounded holders, which are open at least at an upper side thereof, which assembly is furthermore provided with pots made of a biodegradable material that can be detachably positioned within said holders, which pots contain the ball plants.

With such a assembly, which is known from Japanese patent application No. 10225535, the pots are removed from the holders once the plants they contain have sufficiently grown, after which they are placed in a larger holder or planted in the ground. Since the pot is composed of a biodegradable material, it will biologically decompose after being placed into the ground. Consequently, the pot will not impede further root growth and need not be removed from the root ball.

With the assembly that is known from the aforesaid Japanese document, the walls of the holder fully abut against the walls of the pot. Roots of the plants contained in the pot will grow through the walls of the pot and continue to grow between the walls and the holders and the walls of the pot, thereby deforming the pot. This root growth is undesirable.

The object of the invention is to provide an assembly by which ball plants can be easily transported both inside and outside the carrier whilst an optimum root growth is ensured.

This object is accomplished with the assembly according to the invention in that the pot is positioned within the holder, with at least one air passage space being present between the pot and the holder.

As a result of the presence of the air passage space, roots that penetrate through the biodegradable material 1 of the pot will be brought into contact with air, as a result of which the roots will die in those places (airpruning) and grow further at other locations in the pot.

Since the pot is positioned within the holder and is consequently locked against movement, for example in a direction parallel to the flat body, so that the pot cannot move within the holder, a stable position of the pot within the holder is realised. If both the pot and the holder are cylindrical in shape, it is possible for the pot to rotate within the holder, for example, whereas the position of the pot within the holder will prevent any movement thereof in the longitudinal direction or the transverse direction of the flat body.

The pots, which are made of a biodegradable material, protect the roots of the plants in the root balls in a simple manner.

The carrier can be reused a number of times, for example if it is made of a plastic material. It is also possible, of course, to form the carrier of a material that can be disposed after single use.

It is noted that in an assembly that is known from EP-A1-0 704 151, ball plants are directly positioned in compartments of the carriers. Once the plants have reached a desired size, the ball plants are removed from the compartments and transferred to a larger compartment or planted into the ground.

Such an assembly has this drawback that the root balls, depending on their composition, may fall apart, as a result of which the roots of the plants will be exposed and may easily be damaged, which is undesirable in view of the further growth of the plant.

It is further noted that from FR-2,544,958 there is known a pot accommodated in a holder, with an air passage space being present between the pot and the holder. Via said air passage space air is led into the pot through openings that are present in the pot. The holder does not form part of a carrier provided with a number of holders, whilst in addition the pot is not biodegradable.

One embodiment of the assembly according to the invention is characterized in that at least one wall bounding the holder is provided with at least two wall parts joining each other near a point of intersection, which wall parts each include an angle with a wall of the pot abutting said point of intersection.

In this way the wall only comes into contact with the pot at the point of intersection, whilst being spaced from the wall parts on either side of said point of intersection, with an air passage space being locally present between the wall parts and the pot, which air passage space prevents root growth through the pot in a simple manner, as already indicated above.

Preferably, the pot comes into contact with the holder in a minimum number of places, because roots may tend to grow further at those locations.

Since the wall parts join each other near a point of intersection, a single point of intersection or a number of points of intersection located on a line of intersection is (are) obtained, so that the area of contact between the cavity and the holder will be minimal.

Yet another embodiment of the assembly according to the invention is characterized in that the wall parts include an angle of less than 180° with each other.

This achieves in a simple manner that two wall parts join each other near a line of intersection.

Yet another embodiment of the assembly according to the invention is characterized in that the holder is provided with at least one groove near the bottom side thereof, which groove opens into the air passage space.

As a result of the presence of the groove, air is also supplied at the bottom side of the pot, so that root growth through the pot is prevented in a simple manner at that location as well.

Another embodiment of the assembly according to the invention is characterized in that the holder is provided with an air passage near the bottom side thereof.

The air passage enables an air flow to take place between the bottom side of the holder and the upper side thereof in a simple manner.

Yet another embodiment of the assembly according to the invention is characterized in that the holder comprises a number of walls that are spaced from the pot as well as walls present therebetween, by means of which latter walls the pot is positioned within the holder.

A relatively large air passage space is present between the pot and the walls that are spaced from the pot, so that an adequate circulation of air around the pot is ensured. At the same time, the pot is positioned within the holder and locked in position within the holder by the walls present therebetween. As already said before, the contact area between said walls and the pot is preferably minimal.

Yet another embodiment of the assembly according to the invention is characterized in that the assembly can be stacked together with similar assemblies, with the holders of one assembly extending into pots of an underlying assembly.

In this way it is possible to provide carriers with pots and to stack a number of said assemblies at the production site, thus achieving a limited volume of the stacked-together assemblies. In this way the storage costs and/or the transport costs of such assemblies remain comparatively limited.

The invention also relates to a carrier suitable for use in such an assembly.

The invention will now be explained in more detail with reference to the drawings, in which:
Figures 1-1C are a top plan view and side views of an embodiment of a holder according to the invention;
Figures 2A and 2B are a front view and a sectional view, respectively, along the line A-A of the holder that is shown in figure 1A with a pot positioned therein;
Figures 3A and 3B are a front view and a sectional view along the line B-B of the holder that is shown in figure 1A with a pot positioned therein;
Figure 4 shows a holder stacked on a pot of an assembly according to the invention;
Figures 5A-5F are perspective views from different angles of a holder of a carrier according to the invention.

Like parts are indicated by the same numerals in the figures.

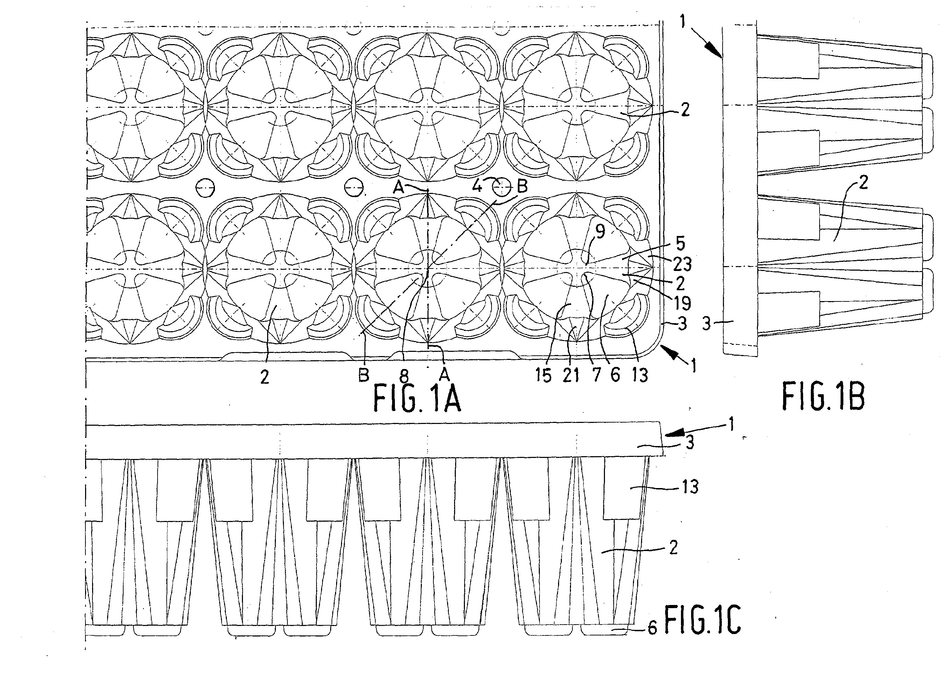

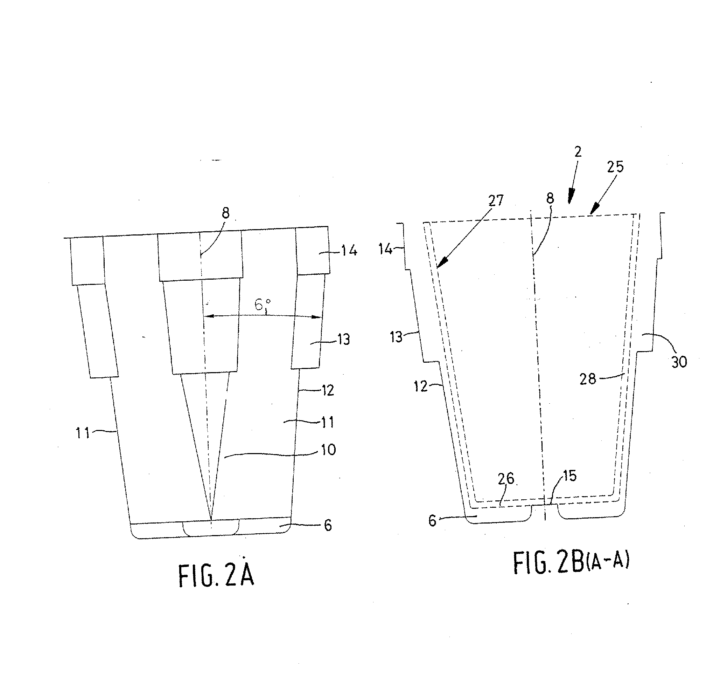

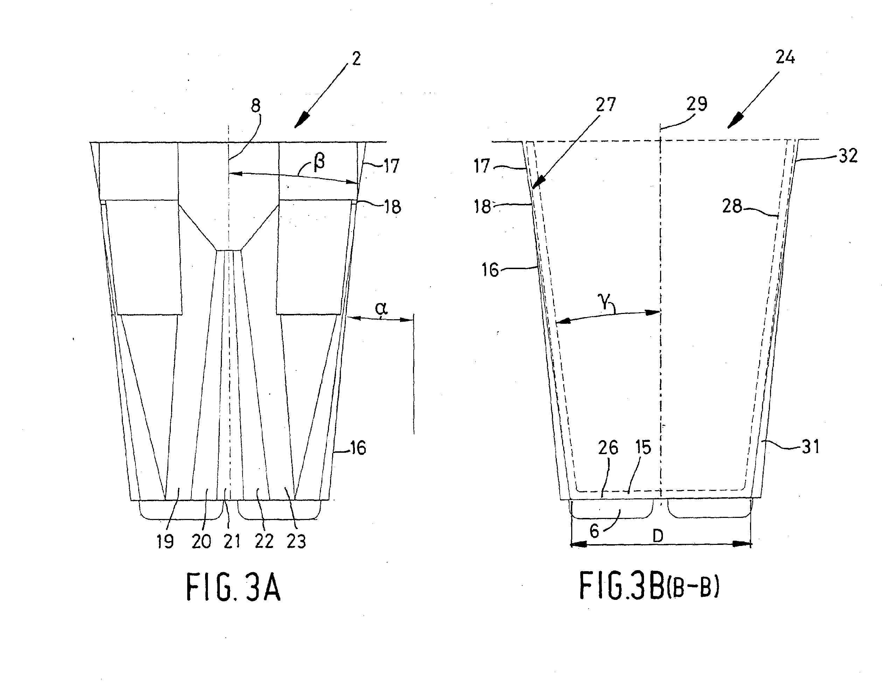

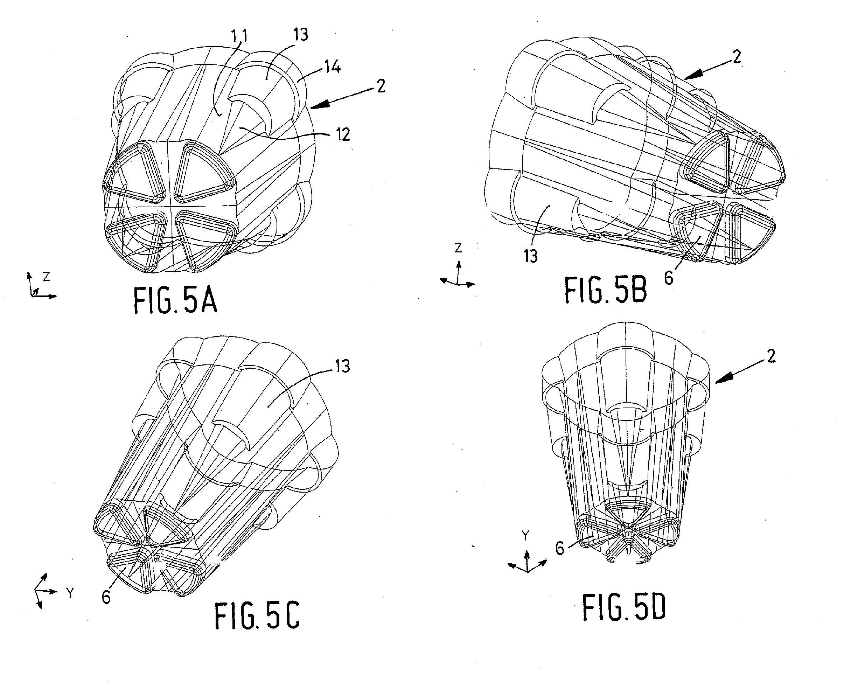

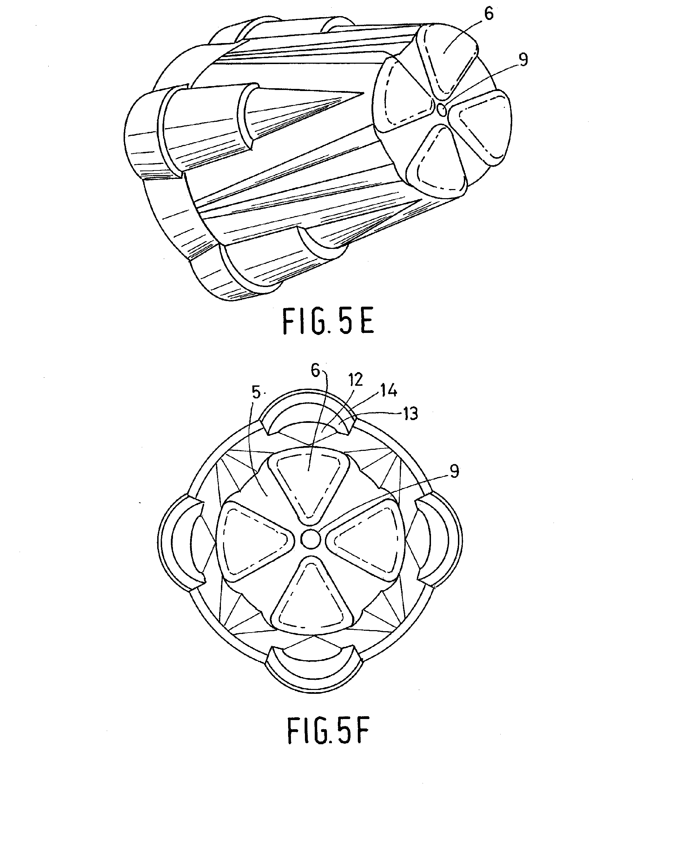

Figure 1 shows a carrier 1 according to the invention, which has been thermo-formed from a sheet of plastic material. The carrier 1 comprises a number of holders 2 lying side by side, which are arranged in a regular pattern with respect to each other, as is shown in figure 1A. The carrier 1 is circumferentially provided with a strengthening edge 3. Between the individual holders 2, the carrier 1 is provided with air passages 4. As is shown in figures 2A-5F, each holder 2 is provided with a bottom part 5, in which for triangular supports 6 are formed, with a fictional point 7 of the supports 6 extending towards a central axis 8 of the holder 2. The bottom part 5 is further provided with a central air passage 9. A tubular part 10, which is open on a side remote from the bottom part 5, joins the bottom part 2. The part 10 is provided with a wall part 11 on a side of each support 6 remote from the central axis 8, which wall part comprises a wall part 12 that flares out. On a side remote from the bottom part 9, the flaring part 12 is connected to a flange-shaped part 13, which is connected to a projecting edge 14 on a side remote from the part 12. The wall of the flange-shaped part 13 includes an angle of e.g. 6° with the central axis 8. Between two supports 6 arranged adjacently to each other, the bottom part 5 is provided with contacting surfaces 15, which join the part 10 on a side remote from the central axis 8. The part 10 further comprises a first wall part 16, which includes an angle α of e.g. 5.5° with the central axis 8. The first wall part 16 is connected to a second wall part 17, which includes an angle β of e.g. 9° with the central axis 8. The wall parts 16, 17 intersect at a line of intersection 18. The wall parts 16, 17 include an angle of less than 180° with each other. The first wall part 16 is further provided with a number of strips 19, 20, 21, 22, 23, which form channels lying side by side and supports for the pot.

In addition to the carrier 1, the assembly 24 according to the invention comprises a number of pots 25 made of a biodegradable material.

Each pot 25 is provided with a circular bottom plate 26 and a cone 27 that joins the bottom plate. A wall 28 of the cone 27 includes an angle γ with a central axis 29 of the pot 25, which angle γ is larger than the angle α that the first wall part 16 includes with the central axis 8 and smaller than the angle β that the second wall part 17 includes with the central axis 8. The angle γ and the diameter D of the bottom plate are such that the wall 28 of a pot 25 that is placed in a holder 2 abuts against the holder 2 at the location of the point of intersection 18 of the first wall 16 and the second wall 17. In addition, the bottom plate 18 abuts against the wall parts 15 of the bottom side 5 of the holder 2. The pot 25 is thus effectively positioned within the holder 2 in a simple manner so as not to be movable with respect to the holder 2 in a direction parallel to the main face of the carrier 1. On the other hand, the pot 25 can easily be lifted from the holder 2. Undesirable movement of the pot 25 with respect to the holder 2 during transport will not be possible, however. A relatively large air passage space 30 is present between the pot 25 and the walls 12, 13, 14 of the holder 2, which air passage space extends from the upper side of the holder 2 to within the supports 6 and to the air passage 9. Relatively small air passage spaces 31, 32 are present between the pot 25 and the wall parts 16, 17, which spaces each connect to the air passage space 30 in the circumferential direction of the pot 25. In addition, the air passage spaces 30, 31, 32 are connected to the air passage 9 via the supports 6.

Since the pot 25 is in contact with the holder 2 in a relatively limited number of places, it is on the one hand ensured that the pot 25 is properly positioned within the holder 2 whilst at the same time providing a sufficient number of air passage spaces 30, 31, 32, 6, 15 between the pot 25 and the holder 2, so that airpruning will occur when the pot contains a plant such as a rootstock for a vine. The roots of such a plant will tend to penetrate through the wall 28 and the bottom plate 26 of the pot 25, which is made of a biodegradable material. As soon as the roots reach the other side of the pot 25, they will come into contact with the air present in the air passage spaces, causing the roots to be burnt, as it were (airpruning).

Once the plant that is present in the pot 25 has reached a desired size, the plant is removed from the holder 2 together with the pot 25 and placed into the ground. The biodegradable material will biologically decompose in the ground, so that eventually the roots of the plant can freely continue to grow in the ground.

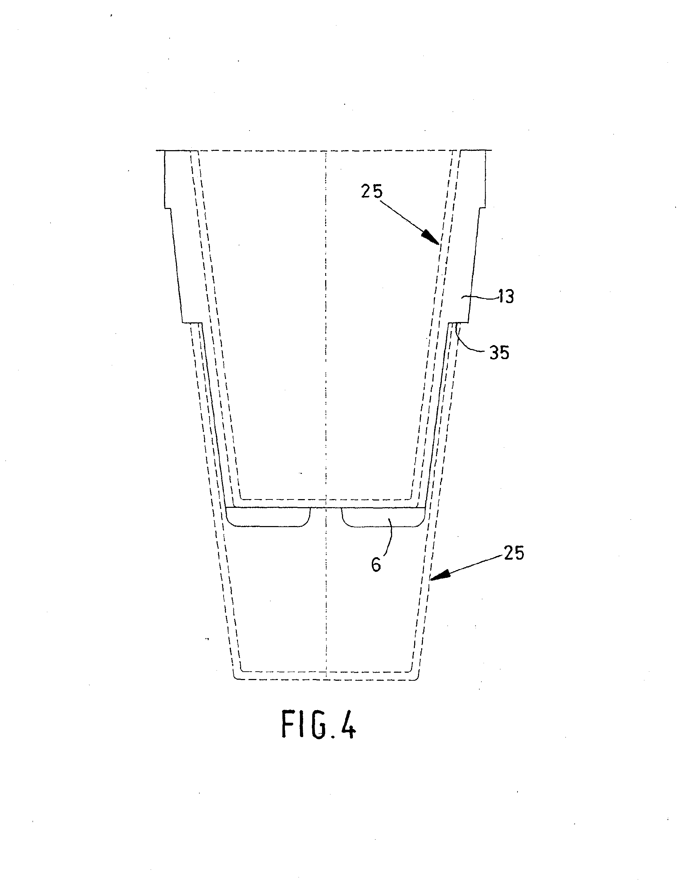

The carriers 1 and the pots 25 are separately produced, after which the pots 25 are placed into the holders 2 of the carriers 1. Carriers 1 provided with pots 25 are stacked together for transport, with the holders 2 of a first carrier 1 being positioned in pots 25 of an underlying assembly. The flanges 13 of a holder 2 are supported on an upper edge 35 of a pot 25 in that position (see figure 4).

It is also possible to position ball plants directly within the holders 2 of the carrier. In that case the root growth will not be the same as in the situation in which the root ball is placed in a pot 25, however.

## Claims

1. An assembly provided with a carrier for ball plants, comprising a substantially flat body accommodating a number of wall-bounded holders, which are open at least at an upper side thereof, which assembly is furthermore provided with pots made of a biodegradable material that can be detachably positioned within said holders, which pots contain the ball plants, **characterized in that** the pot is positioned within the holder, with at least one air passage space being present between the pot and the holder.

2. An assembly according to claim 1, **characterized in that** at least one wall bounding the holder is provided with at least two wall parts joining each other near a point of intersection, which wall parts each include an angle with a wall of the pot abutting said point of intersection.

3. An assembly according to claim 1 or 2, **characterized in that** the wall parts include an angle of less than 180° with each other.

4. An assembly according to any one of the preceding claims, **characterized in that** the holder is provided with at least one groove near the bottom side thereof, which groove opens into the air passage space.

5. An assembly according to any one of the preceding claims, **characterized in that** the holder is provided with an air passage near the bottom side thereof.

6. An assembly according to any one of the preceding claims, **characterized in that** the air passage extends between the bottom side and the upper side of the holder.

7. An assembly according to any one of the preceding claims,
**characterized in that** the holder comprises a number of walls that are spaced from the pot as well as walls present therebetween, by means of which latter walls the pot is positioned within the holder.

8. An assembly according to any one of the preceding claims,
**characterized in that** the assembly can be stacked together with similar assemblies, with the holders of one assembly extending into pots of an underlying assembly.

9. An assembly according to claim 8, **characterized in that** a flange of the holder of one assembly rests on an upper edge of an underlying pot of another assembly in the stacked position of assemblies.

10. A carrier suitable for use in an assembly according to any one of the preceding claims, which carrier comprises a substantially flat body accommodating a number of wall-bounded holders, which are open at least at an upper side thereof, **characterized in that** the holder is provided with a number of air passage spaces extending from the upper side of the holder to the bottom side thereof.

11. A carrier according to claim 10, **characterized in that** at least one wall bounding the holder is provided with at least two wall parts joining each other near a point of intersection, which wall parts include an angle of less than 180° with each other.

12. A carrier according to claim 10 or 11, **characterized in that** the holder is provided with at least one groove near the bottom side thereof, which groove opens into the air passage space.

13. A carrier according to claim 11 or 12, **characterized in that** the holder is provided with an air passage near the bottom side thereof.
